# DEMANDE DE BREVET EUROPEEN

(11) **EP 1 267 158 A2**
(43) Date de publication de la demande: **18.12.2002**
(21) Numéro de dépôt: 02291439.4
(22) Date de dépôt: 11.06.2002
(51) Int. Cl.: G01N 27/22, G01N 27/24

(54) **Méthode de diagnostic de câbles de précontrainte externe contenus dans des gaines**

(30) Priorité: 13.06.2001 FR 0107719
(71) Demandeur: LABORATOIRE CENTRAL DES PONTS ET CHAUSSEES, 75732 Paris Cedex 15 (FR)
(72) Inventeur: Dupas, André, 91400 Orsay (FR); Sudret, Jean-Pierre, 71400 Autun (FR); Chabert, Alain, 92160 Antony (FR)
(74) Mandataire: Le Bras, Hervé

(57) **Abrégé**

L'invention concerne une méthode de diagnostic non destructif de câbles (1) d'armature de précontrainte contenus dans des gaines (ou conduits) (2) isolantes disposées à l'extérieur d'ouvrages d'art en béton et dans lesquelles l'espace résiduel compris entre les câbles d'armature et la paroi interne de la gaine renferme un coulis (4) à base de liant hydraulique, caractérisée par le fait qu'on utilise un appareil (5) portatif comportant au moins deux électrodes (11, 12) sous forme de plaques métalliques cylindriques séparées l'une de l'autre et susceptibles d'être appliquées contre la paroi externe de ladite gaine (2), et un circuit oscillateur (15) à haute fréquence relié auxdites électrodes (11, 12) et susceptibles de fournir une fréquence variable en fonction de la valeur de la capacité du condensateur formé par lesdites électrodes (11, 12) et l'environnement de ces dernières, on consulte ladite gaine (2) en appliquant successivement lesdites électrodes (11, 12) sur des portions de la paroi externe de ladite gaine (2) et
on analyse la fréquence fournie par le circuit oscillateur (15) lors des auscultations.

## Description

L'invention concerne une méthode de diagnostic non destructif de câbles d'armature de précontrainte contenus dans des gaines (ou conduits) isolantes disposées à l'extérieur d'ouvrages d'art en béton et dans lesquelles l'espace résiduel compris entre les câbles d'armature et la paroi interne de la gaine renferme un coulis à base liant hydraulique.

De nombreux ouvrages d'art comportent de la précontrainte extérieure au béton soit d'origine, soit après un renforcement de la structure.

Les câbles sont disposés à l'intérieur de gaines, généralement en PEHD. Pour assurer la pérennité des câbles, on injecte généralement dans l'espace résiduel compris entre le câble et la face interne de la gaine un coulis à base de liant hydraulique.

Récemment, des ruptures de câbles se sont produites sur quelques ouvrages. Après examens et investigations, il apparaît que ces ruptures sont intervenues par oxydation des câbles, dans des zones où le câble est mal protégé ou n'est pas protégé par le coulis. Ceci peut se produire par absence de coulis dans certaines zones, la présence de poches d'air, la présence d'eau avec ou sans produit blanchâtre à la surface du coulis. Il est à noter que la tension des câbles est de 0,8 fois la force de rupture garantie. La présence d'une oxydation peut entraîner la rupture d'un brin, puis en cascade la rupture d'un toron voire du câble.

Dans le cadre de la gestion des ouvrages d'art équipés de précontrainte externe, se pose donc un problème au niveau de l'inspection détaillée. Les défauts ne peuvent être détectés visuellement, au niveau des gaines de précontrainte, car ces dernières sont opaques. Pour aboutir au diagnostic de l'état de la précontrainte, il faut réaliser des investigations spécifiques. Certaines sont destructrices, comme l'ouverture de fenêtres dans les gaines avec examen à l'oeil, à l'endoscope ou à l'aide d'une micro caméra. On pourrait également réaliser des clichés gammagraphiques comme cela se fait pour ausculter la précontrainte intérieure au béton, mais il s'agit alors d'une auscultation lourde et onéreuse.

On connaît par FR 2 527 776 un dispositif de mesure de la teneur en eau de matériaux granulaires ou pulvérulents, notamment de matériaux en mouvement sur une bande transporteuse ou dans une conduite, qui comporte une sonde capacitive munie d'au moins deux électrodes séparées par une zone isolante et en contact avec le matériau à étudier, et un oscillateur à haute fréquence associé aux électrodes afin de fournir une tension alternative de fréquence variable avec la teneur en eau. Ce dispositif de mesure en forme de cylindre ou d'ogive est fixe et est disposé dans le matériau en mouvement.

FR 2 703 462 concerne une autre disposition d'un appareil de mesure en continu de la teneur en eau d'un matériau granulaire pulvérulent ou fibreux. Dans ce document, les électrodes disposées à une certaine distance l'une de l'autre sur un support isolant sont également placées sur le trajet du matériau à un endroit où le matériau est conditionné par le support.

Ces deux documents concernent donc des dispositifs pour mesurer la teneur en eau de matériaux granulaires ou pulvérulents sensiblement homogènes dans lesquels les électrodes du capteur sont en contact direct avec le matériau. Ils ne suggèrent pas que l'on puisse utiliser une sonde capacitive pour ausculter de l'extérieur une gaine isolante contenant un coulis de liant hydraulique et des câbles de précontrainte.

US 4,240,028 décrit un appareil pour mesurer le degré de saturation en eau dans une huile circulant dans un tuyau non conducteur. Cet appareil comporte des électrodes fixées sur le tuyau, qui délivrent des signaux dont la fréquence est fonction du mélange eau-huile. Ces signaux sont mélangés avec des signaux de référence fournis par un deuxième oscillateur et dont la fréquence calibrée correspond à celle d'une eau sans huile circulant dans le tuyau, la différence entre les deux fréquences est transformée en un signal analogique selon un technique classique.

WO97/00453 décrit également un procédé pour mesurer les pourcentages de deux fluides dont l'huile circulant dans un tuyau non conducteur au moyen d'une pluralité d'électrodes fixées autour du tuyau. Ces électrodes sont excitées et auscultées tour à tour. C'est l'ensemble des tensions relevées sur toutes les électrodes excitées les unes après les autres qui permet de déterminer la répartition des deux fluides par un traitement des valeurs en tenant compte d'un assemblage de capacités diélectriques inter-électrodes en série-parallèle.

Ces deux documents concernent ainsi la mesure des pourcentages de deux fluides, dont l'un est de l'huile, circulant dans un tuyau, par un appareil comportant des électrodes fixées sur le tuyau. Ils ne suggèrent pas que l'on puisse utiliser les mêmes méthodes, ou les mêmes appareils pour ausculter des tuyaux renfermant des éléments solides et des câbles en acier, et renfermant éventuellement des poches d'eau ou d'air.

L'idée qui a servi de base à l'invention est le fait que les désordres des câbles de précontrainte extérieure au béton, renfermées dans des gaines sont essentiellement dues à l'oxydation par présence d'eau dans le coulis, ou à la présence de poches d'air aptes à accueillir de l'eau, car l'eau remonte dans le coulis par capillarité et entraîne les adjuvants. Or, la constante diélectrique de l'eau (ε eau = 80) est très élevée par rapport à celles des granulats et du ciment (ε = 4 à 5) et à celle du polyéthylène (ε = 2 à 3), la constante diélectrique de l'air étant par définition égale à 1. Bien que le matériau constitutif de la gaine soit électriquement isolant, il n'est pas évident que la capacité exprimée en farad d'un condensateur constitué de deux électrodes métalliques appliquées sur la face externe d'une portion de gaine contenant un câble de précontrainte noyé dans un coulis permette de détecter des anomalies telles que la présence de poches d'air ou la présence d'eau du fait notamment de la présence du câble métallique dans la gaine.

Or, des essais réalisés sur un corps d'épreuve comportant un élément de gaine fermé à ses deux extrémités par des flasques transparentes et renfermant un élément de câble, dans lequel les flasques comportent des orifices permettant l'introduction et la vidange de différents matériaux tels que de l'eau et du sable, ont permis de vérifier qu'il est possible d'ausculter une précontrainte externe au béton par une sonde capacitive adaptée.

Selon l'invention, la méthode de diagnostic est caractérisée par le fait qu'on utilise un appareil portatif comportant au moins deux électrodes sous forme de plaques métalliques cylindriques séparées l'une de l'autre et susceptibles d'être appliquées contre la paroi externe de ladite gaine et un circuit oscillateur à haute fréquence relié auxdites électrodes, fonctionnant à une fréquence comprise entre 25 et 75 MHz, et susceptible de fournir une fréquence variable en fonction de la valeur de la capacité du condensateur formé par lesdites électrodes et l'environnement de ces dernières, on ausculte ladite gaine en appliquant successivement lesdites électrodes sur des portions de la paroi externe de ladite gaine et on analyse la fréquence fournie par le circuit oscillateur lors des auscultations.

Avantageusement, on ausculte une section droite de la gaine, en appliquant les électrodes successivement sur des portions de paroi externe réparties angulairement de 45° autour de l'axe de la gaine.

Pour éviter les effets de main et pour permettre le transport du signal à longue distance, le circuit oscillateur comporte un diviseur de fréquence qui délivre un signal à basse fréquence dans la gamme de 5 000 ou 40 000 Hz.

Le signal à basse fréquence fourni est analysé par un module électronique de traitement. Une première analyse consiste à faire la différence entre la fréquence fournie au cours d'une auscultation d'une portion de paroi et une fréquence de référence fournie lorsque les électrodes sont dans l'air.

Une deuxième analyse consiste à comparer les différences de fréquence des différentes auscultations d'un tronçon de gaine avec les différences de fréquence d'auscultations équivalentes effectuées sur un tronçon de gaine réputé sain.

L'invention concerne également un dispositif pour la mise en oeuvre du procédé.

Ce dispositif comporte un appareil portatif comprenant
un bâti présentant sur l'une de ses faces une poignée de préhension et équipée sur la face opposée d'un support d'électrodes isolant de forme cylindrique,
au moins deux plaques d'électrodes fixées sur la face externe concave du support d'électrode,
un circuit oscillateur monté sur le bâti et relié auxdites électrodes, et
un diviseur de fréquence prévu sur le circuit oscillateur et délivrant un signal à basse fréquence, et
un module électronique de traitement des signaux à basse fréquence délivrés par le diviseur de fréquence dudit appareil.

De préférence, les électrodes sont montées de manière amovible et le support d'électrodes est réalisé en un matériau suffisamment souple pour épouser la paroi externe de la gaine.

D'autres avantages et caractéristiques de l'invention ressortiront de la lecture de la description suivante faite à titre d'exemple et en référence aux dessins annexés, dans lesquels :

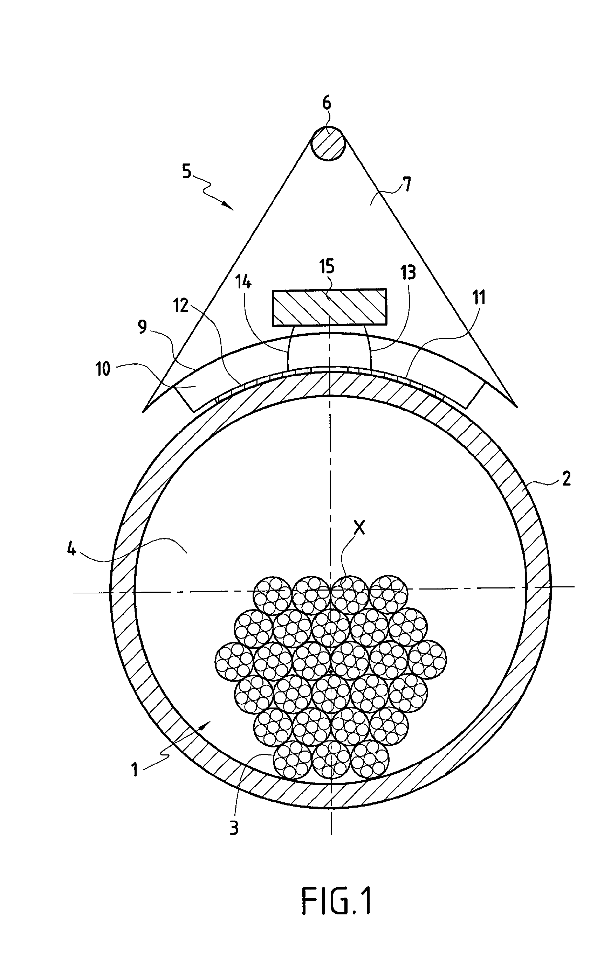

la figure 1 est une vue en coupe d'une gaine contenant un câble de précontrainte, sur laquelle est appliqué un dispositif pour mettre en oeuvre le procédé de diagnostic selon l'invention, cette coupe étant prise selon la ligne I-I de la figure 2 ;
la figure 2 est une vue latérale de la gaine et du dispositif de diagnostic de la figure 1 ;
les figures 3 à 11 montrent les courbes de variation de fréquence obtenues au cours de divers essais.

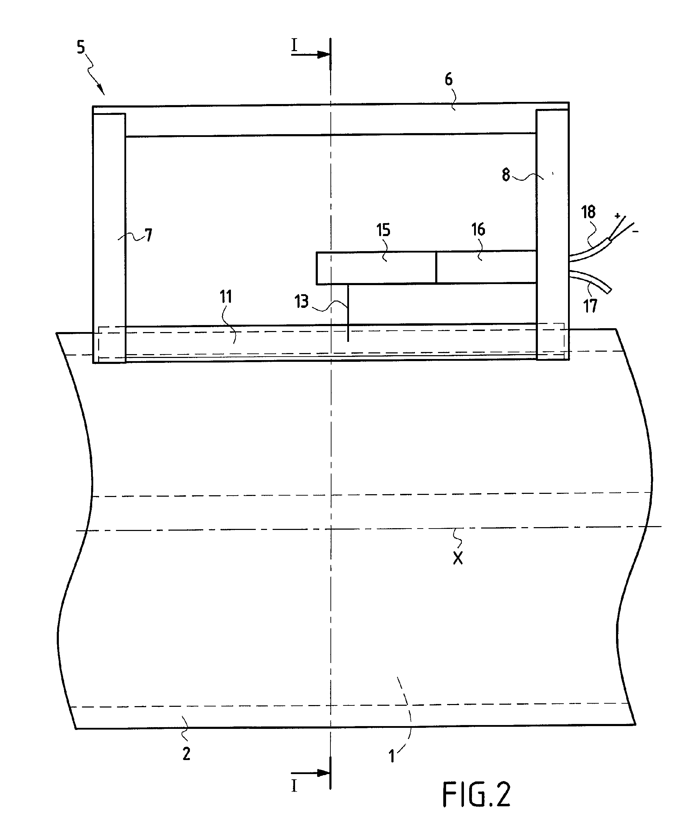

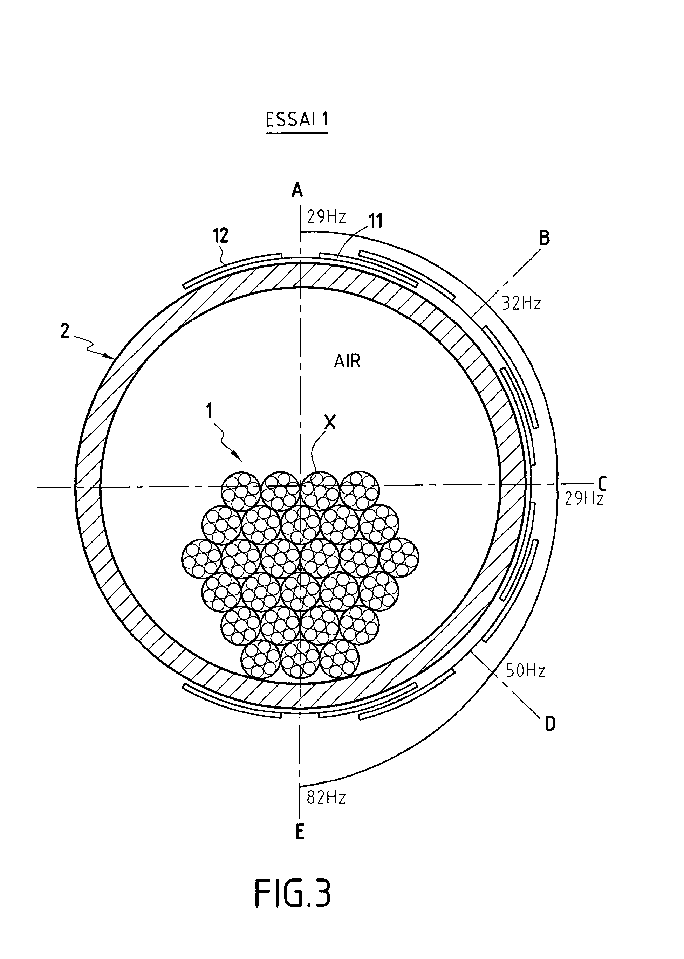

Les figures 2 et 3 montrent un câble 1 de précontrainte disposé dans une gaine 2 isolant d'axe X, elle-même disposée à l'extérieur d'un ouvrage d'art en béton.

La gaine 2 est réalisée par exemple en polyéthylène à haute densité, PEHD, et le câble 1 comporte une pluralité de torons 3 en acier, par exemple 27 torons constitués de 7 fils d'acier.

Le câble 1 occupe plus de la moitié du volume interne de la gaine 2. Le volume inoccupé par le câble 1 est rempli par injection d'un coulis 4 à base de liant hydraulique qui assure la protection du câble 1 contre l'oxydation.

Le but de l'invention est de proposer un dispositif 5 et une méthode pour détecter la présence de poches d'air ou d'humidité dans le coulis 4.

Le dispositif 5 comporte une poignée de préhension 6 reliant deux parois isolantes 7 et 8 de forme globalement triangulaires dont les bords 9 éloignés de la poignée 6 sont sensiblement circulaires. Un support cylindrique 10, en matière isolante et souple est fixé sur les bords circulaires 9 des deux parois 7 et 8.

Ce support cylindrique 10 comporte sur sa face externe concave deux plaques métalliques 11, 12 séparées l'une de l'autre et reliées par des fils conducteurs 13 et 14 à un circuit oscillateur 15 à haute fréquence.

Le circuit oscillateur 15 à haute fréquence comporte en outre un diviseur de fréquence 16 qui délivre un signal à basse fréquence fonction de la capacité exprimé en farad du condensateur constitué par les plaques métalliques 13 et 14 et l'environnement externe de ces plaques. Les plaques 13 et 14 jouent ainsi le rôle d'électrodes de condensateur. Le signal à basse fréquence est transmis par un câble 17 à un module électronique de traitement de signal, non montré sur le dessin et qui comporte notamment un fréquence mètre.

La référence 18 désigne un câble d'alimentation du circuit oscillateur 15 et du diviseur de fréquence 16 en courant continu de 10 V par exemple.

Dans le dispositif décrit ci-dessus, le support cylindrique 10 comporte deux électrodes 11, 12, mais il pourrait également comporter une pluralité d'électrodes reliées deux par deux, notamment une électrode centrale et deux électrodes latérales reliées électriquement entre elles. Dans ce mode de réalisation particulier, le circuit oscillateur 15 à haute fréquence, ainsi que le diviseur de fréquence 16 sont fonctionnellement semblables aux circuits électroniques décrits dans FR 2 527 776 et ne nécessitent pas d'autres explications.

Le circuit oscillateur 15 à haute fréquence et le diviseur de fréquence sont montés sur la paroi isolante 9.

Les plaques 11 et 12 formant électrodes sont suffisamment minces pour qu'elles puissent épouser le contour de la surface externe de la gaine 2 lorsqu'on applique le support cylindrique 10 contre la gaine X. Le rayon de courbure de la surface externe concave du support 10 est sensiblement égal au rayon moyen de la gaine 2 à ausculter.

Les plaques 11 et 12 mesurent par exemple 25 mm dans le sens circonférentiel et 150 mm dans le sens de la direction de la poignée 6 et sont réalisées de préférence en cuivre. Elles sont espacées de 10 mm.

Le dispositif 5 comporte en outre un interrupteur non montré sur le dessin pour alimenter à la demande le circuit oscillateur 15 et le diviseur de fréquence 16 en courant électrique.

L'oscillateur à haute fréquence 15 fonctionne à une fréquence comprise entre 25 et 75 MHz, et le diviseur de fréquence 16 délivre un signal à basse fréquence dans la plage des 5 000 Hz ou 40 000 Hz. La fréquence de travail et la fréquence du signal délivré sont fonction des constantes diélectriques relatives des matériaux interposés entre les électrodes 11 et 12.

Pour contrôler la stabilité temporelle du dispositif 5 qui en général est de quelques Hz dans des conditions normales de température et d'humidité, on met le dispositif 5 sous tension pendant 15 mm au moins et on relève la fréquence de référence F0 délivrée par le diviseur de fréquence 16, les électrodes 11 et 12 étant dans l'air.

Pour diagnostiquer les défauts dans le coulis 4, on ausculte la gaine 2 en appliquant successivement les électrodes 11 et 12 sur des portions de surface externe de la gaine 2.

L'opérateur 6 applique par pression les électrodes 11 et 12 contre la gaine 2. De préférence, on ausculte une section de gaine 2 en appliquant successivement les électrodes sur des portions de surface décalées de 45° autour de l'axe X de la gaine 2.

Le module électronique de traitement reçoit des signaux à basse fréquence pour chaque auscultation. Il soustrait de chaque mesure la fréquence de référence F0, relevée au début du procédé et qu'il est possible de rafraîchir de temps en temps. La différence des fréquences peut être affichée à chaque auscultation par le fréquencemètre.

De préférence, on réalise plusieurs mesures pour chaque portion de surface de gaine 2, et on fait la moyenne des mesures.

La mesure obtenue fournit pour la section droite considérée (abscisse selon l'axe X) et l'angle α de la portion de surface auscultée avec un plan radial vertical contenant l'axe X, une indication de la qualité du coulis 4 au voisinage de cette portion de surface.

Il est à noter que l'abscisse X et l'angle α en question peuvent être introduits dans le module électronique de traitement, ce qui permet à ce dernier de stocker les données (abscisse, angle et mesure de la différence de fréquence) pour des traitements automatiques ultérieurs.

Des essais de validité de la méthode préconisée ont été réalisés sur un élément de gaine 2 en PEHD ayant 33 cm de longueur, un diamètre extérieur de 110 mm et un diamètre intérieur de 9,4 mm, cet élément de gaine 2 étant tiré d'une gaine standard couramment utilisée sur des ouvrages d'art en béton. Cet élément est fermé à ses deux extrémités par deux flasques qui comportent des orifices pour permettre l'introduction et la vidange de différents matériaux simulant un coulis, tels de l'eau, du sable. A l'intérieur de l'élément de gaine 2 est disposé un morceau de câble 1 composé de 27 torons de 7 fils. Ce câble a un diamètre de l'ordre de 60 mm. Cet élément de gaine 2 contenant le morceau de câble 1 dans sa région inférieure est monté sur un support, et le dispositif 5 décrit ci-dessus et ayant deux électrodes 11, 12 en cuivre mesurant 25 mm sur 150 mm et espacées de 10 mm a été utilisé pour effectuer les mesures.

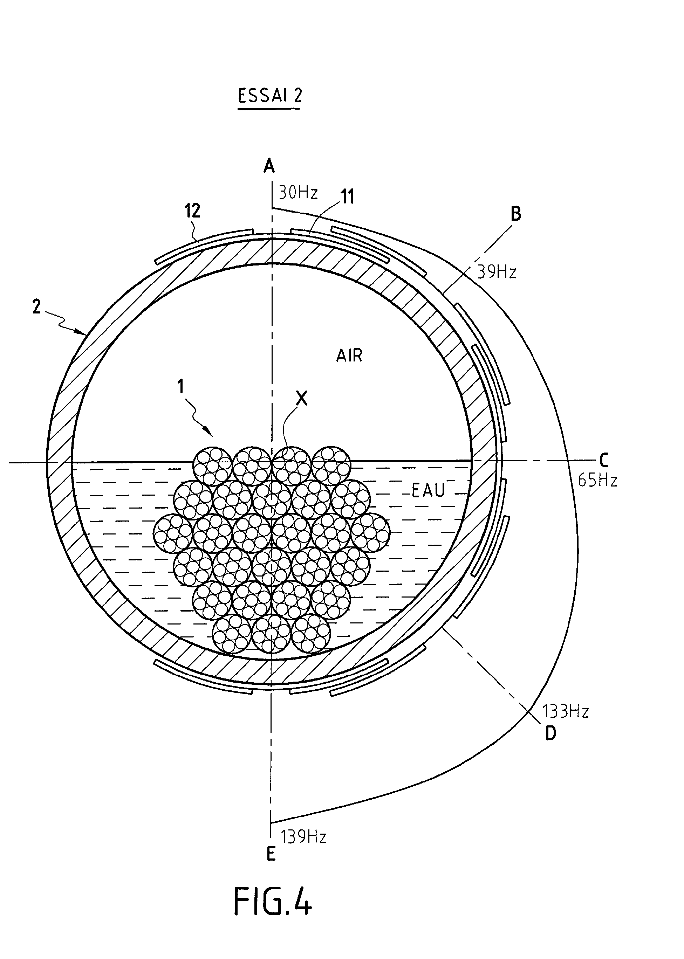

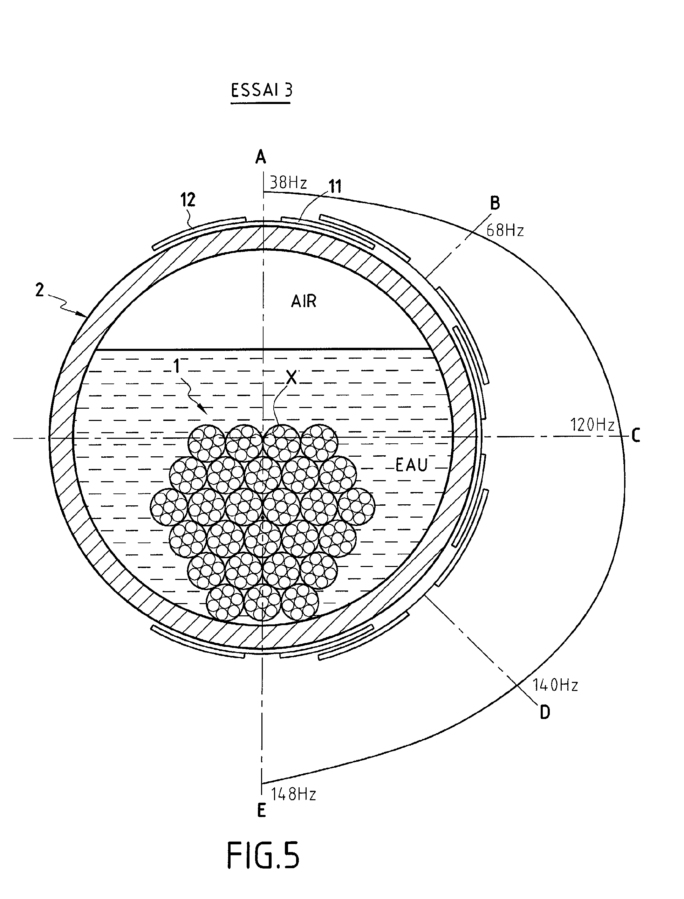

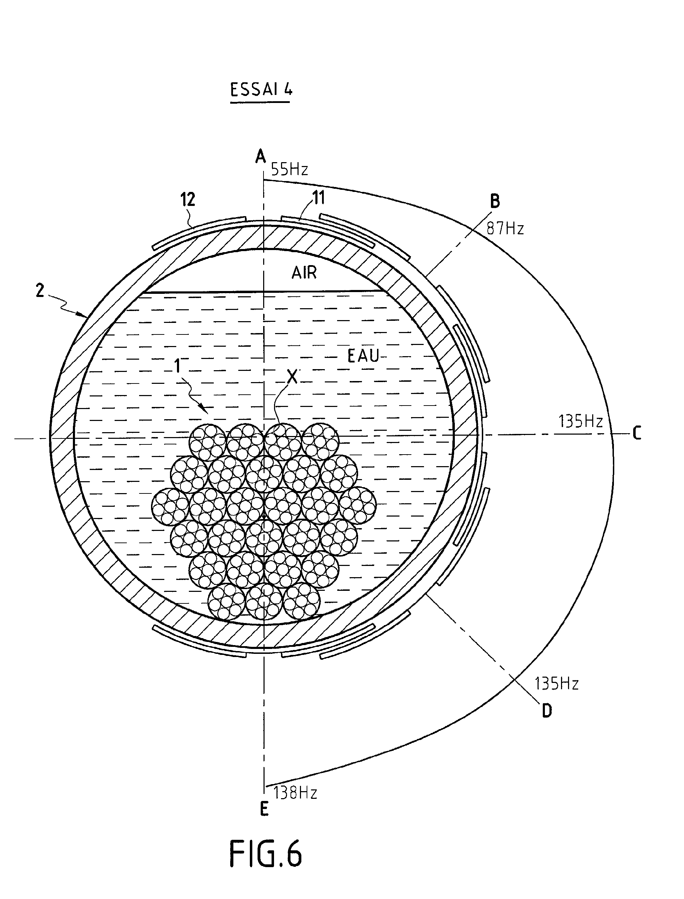

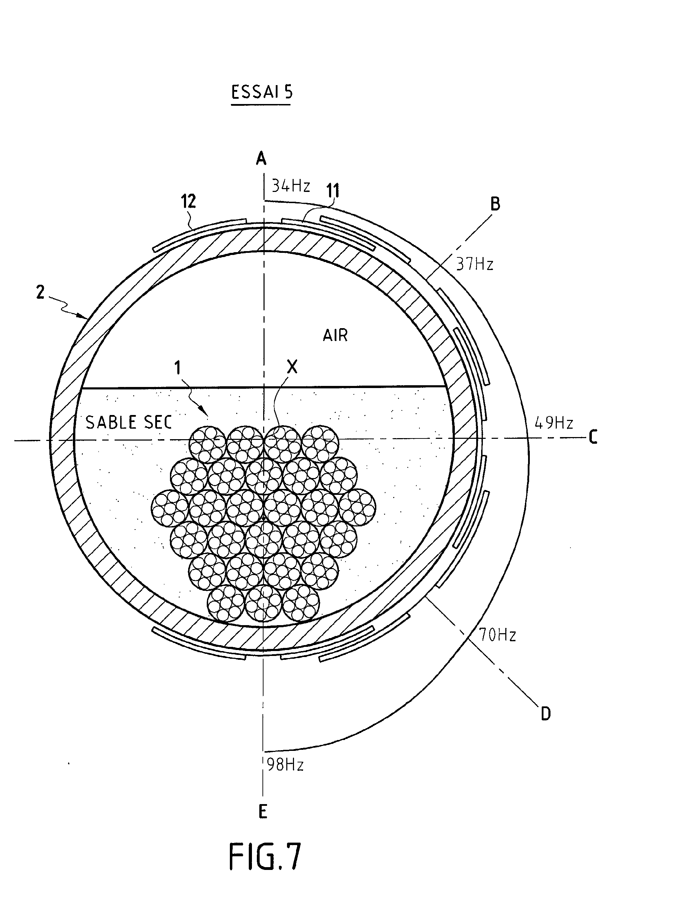

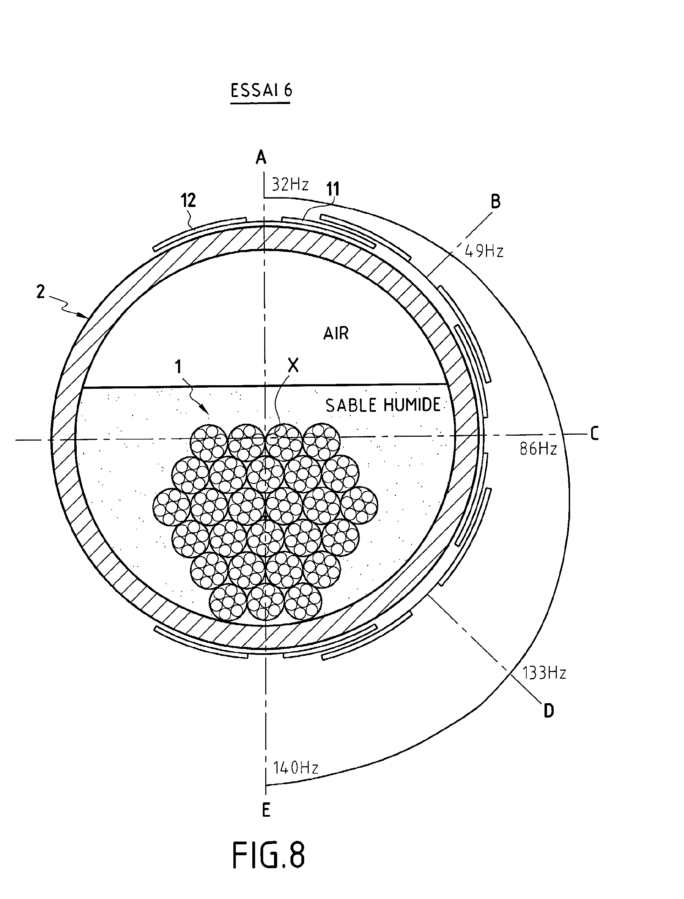

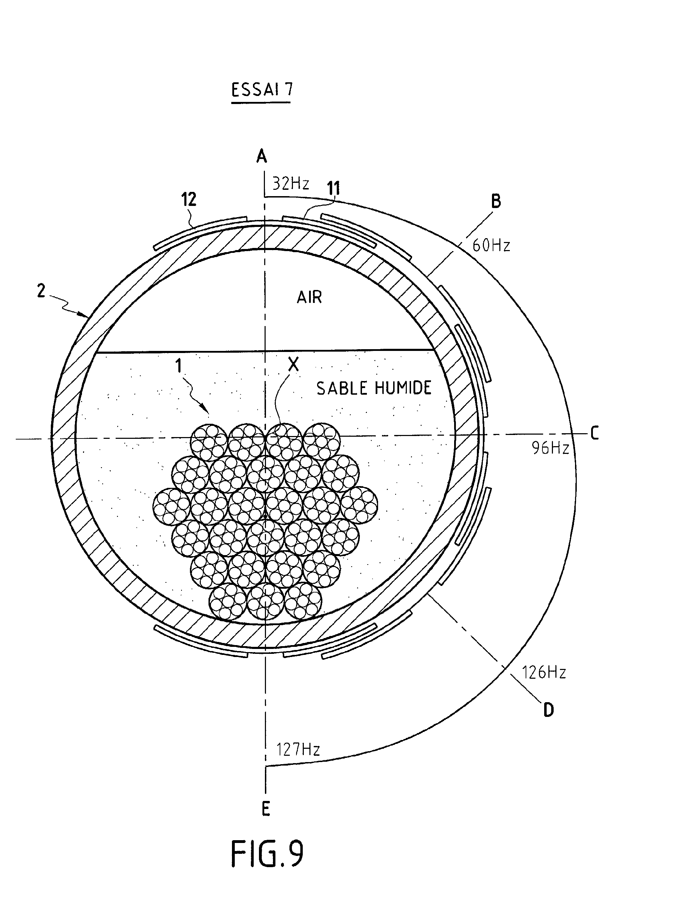

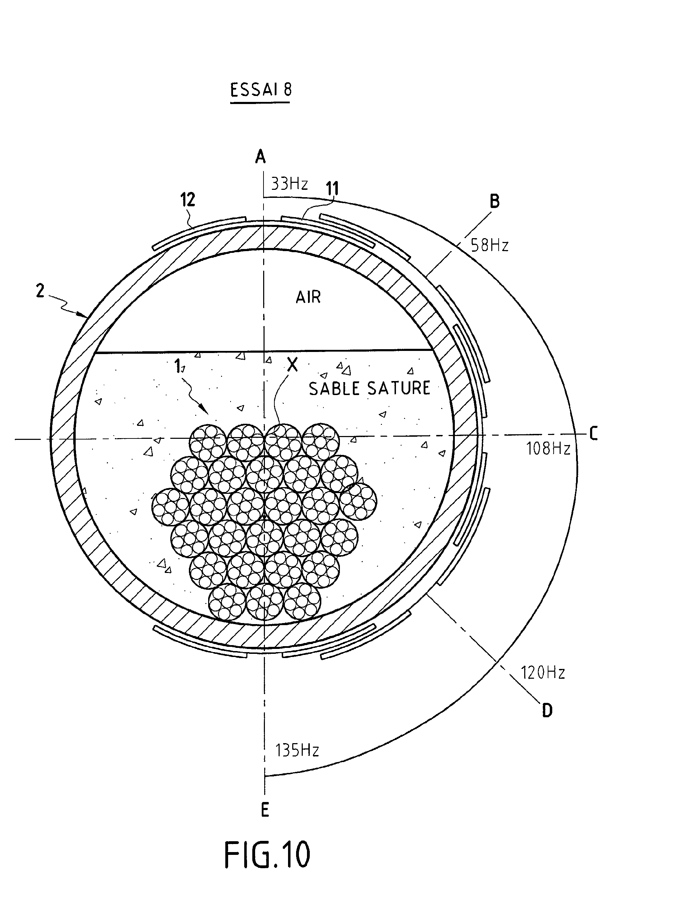

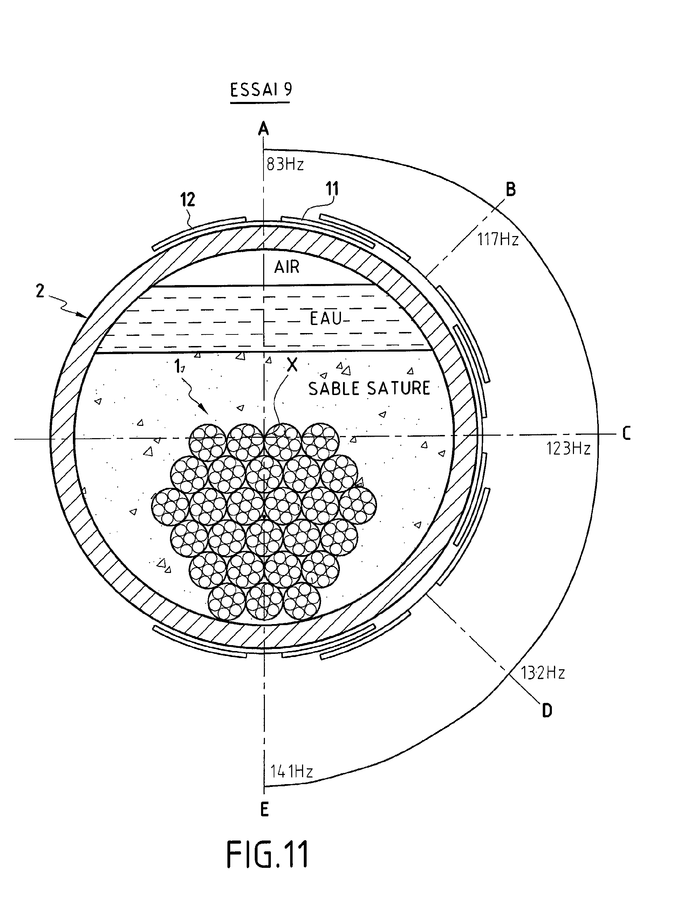

Pour chaque type de remplissage de l'élément de gaine, cinq mesures référencées A, B, C, D, E sur les figures 3 à 11 ont été faites en décalant le dispositif 5 de 45 %. Par raison de symétrie, les mesures symétriques des mesures B, C et D n'ont pas besoin d'être effectuées car elles sont respectivement très voisines des mesures B, C et D ce qui a été vérifié au début des essais.

Le dispositif 5 ayant été mis sous tension depuis 15 min environ, on a relevé la fréquence de référence F0 délivrée par le diviseur de fréquence 16, les électrodes 11 et 12 étant dans l'air, afin de contrôler la stabilité temporelle du dispositif 5. Il a été constaté que, pendant la série des essais qui a duré une demi-journée, F0 n'a varié que de 7 Hz.

Pour vérifier la répétabilité des mesures, on a appliqué les électrodes 11 et 12 en plusieurs points de la génératrice supérieure de l'élément de gaine rempli d'air et contenant l'élément de câble 2, en notant la fréquence de référence F0. on a constaté que les écarts sont faibles, de l'ordre de 2 à 3 Hz. Ces écarts sont essentiellement dus à des positionnements et des pressions appliquées légèrement différents.

### CONDITIONS D'ESSAI

Les séries de mesures ont été faites en remplissant la gaine 2 avec de l'air, de l'eau, du sable sec, humide ou saturé à différentes proportions. Le détail des essais, référencés de 1 à 9 sur les figures 3 à 11, est donné ci-dessous.
Essai 1 : gaine + air + câble
Essai 2 : gaine + air (moitié supérieure) + eau (moitié inférieure) + câble
Essai 3 : gaine + air (3 cm d'épaisseur) + eau (6,8 cm d'épaisseur) + câble Essai 4 : gaine + air (1,5 cm d'épaisseur) + eau (8,3 cm d'épaisseur) + câble
Essai 5 : gaine + air (4 cm d'épaisseur) + sable sec (5,8 cm d'épaisseur) + câble
Essai 6 : gaine + air (4 cm d'épaisseur) + sable humide (5,8 cm d'épaisseur, w = 26 %) + câble
Essai 7 : gaine + air (2,5 cm d'épaisseur) + sable humide (7,3 cm d'épaisseur, W = 20 %) + câble
Essai 8 : gaine + air (2,5 cm d'épaisseur) + sable saturé (7,3 cm d'épaisseur, W = 27 %) + câble
Essai 9 : gaine + air (1 cm d'épaisseur) + eau (1,5 cm d'épaisseur) + sable saturé (7,3 cm d'épaisseur, W = 27 %) + câble.

Les résultats des essais sont reportés sur les feuilles d'essai numérotées de 1 à 9 montrées sur les figures 3 à 12 sur lesquelles on a représenté à la fois la position des électrodes, le niveau des différents matériaux remplissant le conduit, les valeurs des différences de fréquence ΔF entre celles mesurées sur le corps d'épreuve et celle de référence dans l'air F0.

Les différences de fréquence sont indiquées par un chiffre correspondant à la moyenne des valeurs de 3 à 4 mesures et représentées par un segment de longueur proportionnelle à leur valeur porté par l'axe de symétrie X des électrodes 11, 12 en chaque point de mesure numéroté de 1 à 5. Les extrémités des segments ont été reliées par une courbe enveloppe.

Le choix d'utiliser la différence de fréquence au lieu de la fréquence elle-même est liée à une plus grande lisibilité des graphiques (valeurs comprises entre 20 et 200). De plus, cela permet de corriger d'éventuelles dérives du dispositif 5 qui n'ont pas été observées dans les essais.

On notera des différences significatives des ΔF suivant la position des électrodes 11, 12 et des matériaux intéressés par le volume de mesure, compte tenu également de la bonne reproductibilité des mesures (2 à 3 Hz).

Si on compare l'ensemble des essais, on met en évidence l'hétérogénéité du remplissage du conduit :
- L'air seul donne des valeurs faibles. La présence du câble dans le volume de mesure augmente notablement ces valeurs.
- L'eau donne des valeurs beaucoup plus fortes de l'ordre de 4 fois. Par contre, la présence du câble 2 dans le volume de mesure n'augmente pas de façon significative ces valeurs.
- En ce qui concerne le sable, on détecte les différences de teneur en eau qui ont atteint un rapport de 2 entre sable sec et sable humide à W = 26 %. On détecte également les hétérogénéités air, sable. La présence du câble dans le volume de mesure a peu d'influence, comme dans le cas de l'eau seule. Dans le cas du sable sec, on se rapproche du cas de l'air seul.

Dans l'essai 9 où on a une combinaison de sable saturé, d'une couche d'eau surnageante (1,5 cm) et de poche d'air (1 cm), on détecte de façon moins significative les hétérogénéités. En particulier, il est difficile d'identifier la poche d'air.

On peut comparer cet essai avec l'essai 4 où on a une combinaison d'eau et d'une poche d'air (1,5 cm). Cette poche est plus facilement identifiable car ses dimensions sont plus importantes.

En conséquence, les électrodes 11, 12 utilisées intéressent un volume de mesure trop important pour détecter des petites poches d'air. Il suffirait vraisemblablement de modifier la géométrie des électrodes 11, 12 pour que le volume de mesure soit mieux adapté à la détection des petites poches.

On peut tirer de ces essais les conclusions suivantes :
- La faisabilité de la détection des défauts d'injection (présence d'air, présence d'eau...) dans un conduit de précontrainte par méthode capacitive en haute fréquence avec le dispositif modifié de mesure de teneur en eau est démontrée ;
- La fréquence utilisée autour de 35 MHz, en relation directe avec la longueur d'onde et la profondeur de pénétration dans les différents matériaux semble bien adaptée au problème posé compte tenu des dimensions des conduits à ausculter ;
- Des modifications de la géométrie du capteur seront nécessaires pour s'adapter à différents types de conduits. De plus, pour un même conduit, il pourra être nécessaire de concevoir des sabots supports d'électrodes interchangeables pour mieux mettre en évidence certains défauts plus localisés et lever certains doutes d'interprétation qui pourraient subsister.

Dans le mode de réalisation décrit ci-dessus les plaques 11 et 12 formant électrodes sont espacées dans le sens circonférentiel de la gaine à ausculter, mais elles pourraient également être disposées sur les mêmes génératrices de la gaine à ausculter sans sortir du cadre de l'invention, et espacées dans le sens axial de la gaine à ausculter.

Le module électronique de traitement de signal, relié au câble 17, peut être un micro-ordinateur du type portable, qui permet de visualiser sur l'écran en temps réel, les résultats des mesures, et qui enregistre sur un disque les mesures de fréquence. Le dispositif 5 peut comporter avantageusement une roue codeuse qui mesure la distance parcourue par le capteur le long de la gaine. Le fonctionnement du capteur est piloté par le micro-ordinateur équipé d'une carte d'acquisition sur le port PCMIA et d'un logiciel adéquat. Les informations issues de la roue codeuse sont également enregistrées sur le disque. On dispose ainsi d'une mesure continue le long de la gaine du câble de précontrainte, pour une position angulaire déterminée du dispositif 5 autour de l'axe de la gaine.

Une première exploitation des mesures peut se faire sur le site. L'exploitation et l'interprétation finales des mesures pourront être faites ultérieurement à l'aide d'un tableur informatique par exemple.

Il est à noter que la liaison entre le dispositif 5 et le micro-ordinateur peut être réalisée avantageusement par des moyens radio sans fil, afin de supprimer le câble 17. Ceci peut être intéressant pour faciliter le travail sur un ouvrage comportant des gaines de câbles d'armature de précontrainte, car l'accès de ces gaines est généralement difficile.

## Revendications

1. Méthode de diagnostic non destructif de câbles d'armature (1) de précontrainte contenus dans des gaines (ou conduits) (2) isolantes disposées à l'extérieur d'ouvrages d'art en béton et dans lesquelles l'espace résiduel compris entre les câbles d'armature et la paroi interne de la gaine renferme un coulis (4) à base de liant hydraulique,
**caractérisée par le fait qu'**on utilise un appareil (5) portatif comportant au moins deux électrodes (11, 12) sous forme de plaques métalliques cylindriques séparées l'une de l'autre et susceptibles d'être appliquées contre la paroi externe de ladite gaine (2), et un circuit oscillateur (15) à haute fréquence relié auxdites électrodes (11, 12), fonctionnant à une fréquence comprise entre 25 et 75 MHz, et susceptible de fournir une fréquence variable en fonction de la valeur de la capacité du condensateur formé par lesdites électrodes (11, 12) et l'environnement de ces dernières,
on consulte ladite gaine (2) en appliquant successivement lesdites électrodes (11, 12) sur des portions de la paroi externe de ladite gaine (2) et
on analyse la fréquence fournie par le circuit oscillateur (15) lors des auscultations.

2. Procédé selon la revendication 1, **caractérisé par le fait qu'**on ausculte une section droite de la gaine (2), en appliquant les électrodes sur des portions de paroi externe réparties angulairement de 45° autour de l'axe (X) de la gaine (2).

3. Procédé selon l'une des revendications 1 ou 2, **caractérisé par le fait que** le circuit oscillateur (15) comporte un diviseur de fréquence (16) qui délivre un signal à basse fréquence.

4. Procédé selon la revendication 3, **caractérisé par le fait qu'**on analyse le signal à basse fréquence par un module électronique de traitement.

5. Procédé selon la revendication 4, **caractérisé par le fait que** l'analyse consiste à faire la différence entre la fréquence fournie au cours d'une auscultation d'une portion de paroi et une fréquence de référence fournie par l'appareil lorsque les électrodes sont dans l'air.

6. Procédé selon la revendication 5, **caractérisé par le fait que** l'on compare les différences de fréquence des différentes auscultations d'un tronçon de gaine avec les différences de fréquence d'auscultations équivalentes effectuées sur un tronçon de gaine réputée saine.

7. Dispositif pour la mise en oeuvre du procédé selon l'une quelconque des revendications 1 à 6, **caractérisé par le fait qu'**il comporte :
un appareil portatif ayant un bâti (7, 8) présentant sur l'une de ses faces une poignée de préhension (6) et équipée sur la face opposée d'un support (10) d'électrodes isolant de forme cylindrique,
au moins deux plaques d'électrodes (11, 12) fixées sur la face externe concave du support (10) d'électrode,
un circuit oscillateur (15) monté sur le bâti et relié auxdites électrodes (11, 12), et
un diviseur de fréquence (16) prévu sur le circuit oscillateur (15) et délivrant un signal à basse fréquence, et
un module électronique de traitement des signaux à basse fréquence délivrés par le diviseur de fréquence (15) dudit appareil.

8. Dispositif selon la revendication 7, **caractérisé par le fait que** les électrodes (11, 12) sont montées de manière amovible sur le support (10) d'électrodes.

9. Dispositif selon l'une des revendications 7 ou 8, **caractérisé par le fait que** le support (10) d'électrodes est réalisé en un matériau suffisamment souple pour épouser la paroi externe de la gaine (2).

10. Dispositif selon l'une des revendications 7 à 9, **caractérisé par le fait qu'**il comporte en outre une roue codeuse.
